**Europäisches Patentamt**

**European Patent Office**

**Office européen des brevets**

(19)

(11) **EP 1 505 124 A1**

(12) **EUROPÄISCHE PATENTANMELDUNG**

(43) Veröffentlichungstag:
**09.02.2005 Patentblatt 2005/06**

(51) Int Cl.[7]: **C08L 101/00**, C08L 101/14,
C08L 33/08, C08J 3/22

(21) Anmeldenummer: 04103679.9

(22) Anmeldetag: **30.07.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **05.08.2003 DE 10335808**

(71) Anmelder: **HILTI Aktiengesellschaft
9494 Schaan (LI)**

(72) Erfinder:
- **Münzenberger, Herbert
  65191 Wiesbaden (DE)**
- **Förg, Christian
  86862 Dillishausen (DE)**

(74) Vertreter: **Wildi, Roland
Hilti Aktiengesellschaft,
Corporate Intellectual Property,
Feldkircherstrasse 100,
Postfach 333
9494 Schaan (LI)**

(54) **Dauerplastische Knetmasse für Brandschutzanwendungen, Verfahren zu ihrer Herstellung und ihre Verwendung**

(57) Beschrieben werden eine dauerplastische Knetmasse für Brandschutzanwendungen, umfassend eine Brandschutzadditive und übliche Hilfsstoffe enthaltende Matrixmasse auf der Grundlage von organischen Polymeren, ein Verfahren zu ihrer Herstellung und ihre Verwendung zur Brandschutzabdichtung von Öffnungen, Kabel- und Rohrdurchführungen in Wänden, Böden und/oder Decken von Fugen, zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden, zum Zwecke der Wärmeisolation und/oder des Brandschutzes.

Printed by Jouve, 75001 PARIS (FR)

**Beschreibung**

Gegenstand der vorliegenden Erfindung ist eine dauerplastische Knetmasse für Brandschutzanwendungen, umfassend eine Brandschutzadditive und übliche Hilfsstoffe enthaltende Matrixmasse auf der Grundlage von organischen Polymeren, ein Verfahren zur Herstellung dieser Knetmasse sowie ihre Verwendung zur Abdichtung von Öffnungen, Kabel- und Rohrdurchführungen in Wänden, Böden und/oder Decken von Gebäuden, etc.

Für die Feuer- und Rauchabdichtung oder -abschottung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Dekken und Wänden und zwischen Außenwänden und vorgehängten Fassaden von Gebäuden zum Zwecke der Wärmeisolation und/oder des Brandschutzes werden eine Reihe unterschiedlicher Dichtungsprodukte eingesetzt, die in fester vorgefertigter Form, wie beispielsweise in Form von Streifen, Platten, ringförmigen Auskleidungen etc. oder aber auch als Dichtmassen oder Knetmassen vorliegen können.

Die Dichtmassen besitzen einen eigenständigen Anwendungsbereich bei Durchführungen von kunststoffisolierten Einzelkabeln, Kabelbündeln und Rohren durch Öffnungen in Wänden, Böden und/oder Decken von Gebäuden. Sehr häufig werden sie in Kombination mit anderen vorgefertigten Systemen, wie Blöcken oder Platten eingesetzt. Dieser Anwendungsbereich betrifft insbesondere die Verlegung von Kommunikationskabeln durch solche Öffnungen, da es hier vorkommen kann, daß die Brandschutz-Schotts wegen der ständigen Änderung der Kabelbelegung täglich geöffnet und wieder verschlossen werden müssen. Hierzu ist es erforderlich, daß die Dichtmasse dauerplastisch bleibt, so daß es ohne weiteres möglich ist, jederzeit das Brandschutz-Schott zu öffnen und die Kabel neu zu positionieren.

Für diesen Anwendungszweck werden häufig Knetmassen, die auch als Puttys bezeichnet werden, eingesetzt, die meistens aus einem flüssigen Butylkautschuk, Weichmachern (Paraffinöl, Phthalate, Adipate, etc.) und Füllstoffen, mit einem Füllstoffgehalt von bis zu 80%, bestehen. Es sind auch Dichtmassen bekannt, die nur Öle und Füllstoffe enthalten, so beispielsweise Dichtmassen, die Leinöl enthalten und die dann langsam vernetzen (Fensterkit). Diese Knetmassen sind aber nur schwer zu verarbeiten, insbesondere lassen sie sich kaum in Kabelbündel einbringen.

Ein weiterer Nachteil solcher Dichtmassen besteht darin, daß zur Verbesserung ihrer Brandschutzwirkung nur ablative, chemisch intumeszierende oder keramisierende Brandschutzadditive eingesetzt werden können. Demzufolge beschränkt sich das Zulassungsspektrum solcher Dichtmassen auf den Bereich der Rauchabdichtung bei Durchführungen von Kabeln und Stahlrohren. Für eine Zulassung für Kunststoffrohre und Stahlrohre mit organischen Isolierungen müßte eine solche Dichtmasse einen Intumeszenzdruck entwickeln, was mit diesen Brandschutzadditiven aber nicht möglich ist. Die Verwendung von physikalisch expandierbaren intumeszierenden Materialien, wie Blähgraphit oder Vermiculit ist mit solchen Systemen nicht möglich, da diese physikalisch intumeszierenden Brandschutzadditive druckempfindlich sind, so daß sie bei der Herstellung beziehungsweise der Einarbeitung in die Kunststoffmatrix unter den dabei auftretenden Scherkräften zerstört und ihre Aktivität verlieren würden, sowie zu einem Abrieb führen würden, der unerwünschte Verschmutzungen beim Verarbeiten zur Folge hat.

Die Aufgabe der vorliegenden Erfindung besteht nun darin, eine Knetmasse für Brandschutzanwendungen anzugeben, die zwar eine geringe Klebrigkeit aufweist, die eine Haftung auf Kabeln, Beton, Metall etc., ermöglicht, aber bei der Verarbeitung mit der Hand nicht an den Fingern klebt und leicht wieder entfernt werden kann und die auch solche Brandschutzadditive enthält, mit denen es möglich wird, die Anforderungen an den Brandschutz von kunststoffisolierten Kabeln, Kunststoffrohren und Stahlrohren mit organischen Isolierungen in Öffnungen von Gebäuden zu erfüllen.

Es hat sich gezeigt, daß diese Aufgabe dadurch gelöst werden kann, daß man als organisches Polymer in der Matrixmasse der Knetmasse eine Mischung aus einer wässrigen Polymerdispersion und einem niedrig-molekularen, dauerplastischen, flüssigen Polymer einsetzt, weil, wie sich überraschenderweise gezeigt hat, es mit Hilfe einer solchen Matrixmasse möglich wird, auch empfindliche physikalisch intumeszierende Brandschutzadditive, wie Blähgraphit und intumeszierenden Vermiculit, ohne Aktivitätsverlust in die Matrixmasse einzuarbeiten und ohne daß dabei eine Zerstörung der Teilchen unter Bildung entsprechenden Abriebs erfolgt.

Gegenstand der Erfindung ist daher die dauerplastische Knetmasse gemäß Anspruch 1. Die Unteransprüche betreffen bevorzugte Ausführungsformen dieses Erfindungsgegenstandes, ein Verfahren zur Herstellung dieser Knetmasse sowie ihre Verwendung.

Die Erfindung betrifft somit eine dauerplastische Knetmasse für Brandschutzanwendungen, umfassend eine Brandschutzadditive und übliche Hilfsstoffe enthaltende Matrixmasse auf der Grundlage von organischen Polymeren, die dadurch gekennzeichnet ist, daß die Matrixmasse eine Mischung aus einer wässrigen Polymerdispersion (A) und einem niedrigmolekularen, dauerplastischen, flüssigen Polymer (B) in einem Gewichtsverhältnis von (A) zu (B) von 6: 1 bis 1:2,5, vorzugsweise 4:3 bis 3:4 darstellt.

Durch den erfindungsgemäßen Einsatz einer Mischung aus wässrigen Polymerdispersion und dem niedrigmolekularen, dauerplastischen, flüssigen Polymer wird es möglich, der Matrixmasse bei der Herstellung eine derart niedrige Viskosität zu verleihen, so daß das Einarbeiten von scherempfindlichen Additiven, namentlich von Blähgraphit und Vermiculit möglich wird. Die erfindungsgemäße dauerplastische Knetmasse kann direkt als Dichtmasse eingesetzt werden oder aber auch als Knete extrudiert, getrocknet und dann in Form von Platten, Streifen oder Stäben eingesetzt werden. Die erfindungsgemäße Knetmasse kann weichmacherfrei formuliert werden, versprödet nicht und gibt auch keine unerwünschten Bestandteile an die Umgebung ab. Sie läßt sich in sehr einfacher und kostengünstiger Weise herstellen und verarbeiten.

Gemäß einer bevorzugten Ausführungsform enthält die erfindungsgemäße Knetmasse in der wässrigen Polymerdispersion (A) als Polymer mindestens einen Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe, vorzugsweise Poly(methacrylsäurealkylester), Poly(acrylsäurealkylester), Poly(methacrylsäurearylester), Poly(acrylsäurearylester) und/oder Copolymere davon mit n-Butylacrylat und/oder Styrol.

Vorzugsweise weist die wässrige Polymerdispersion (A) bei der Herstellung der Matrixmasse einen Wassergehalt von 5 bis 60 Gew.-%, vorzugsweise von 20 bis 40 Gew.-% auf, was es in Kombination mit dem flüssigen Polymer (B) ermöglicht, auch empfindliche Brandschutzaddit in die Knetmasse einzubringen.

Die wässrige Polymerdispersion (A) ist vorzugsweise in einer solchen Menge in der Matrixmasse enthalten, daß sich ein Wasseranteil in der fertigen Knetmasse von 2 bis 30 Gew.-%, vorzugsweise von 5 bis 15 Gew.-% in Abhängigkeit von dem Trocknungsgrad ergibt.

Gemäß einer weiteren bevorzugten Ausführungsform enthält die erfindungsgemäße Knetmasse als flüssiges Polymer (B) mindestens einen Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe, vorzugsweise Poly(methacrylsäurealkylester) Poly(acrylsäurealkylester), Poly(methacrylsäurearylester), Poly(acrylsäurearylester) und/oder Copolymere davon mit n-Butylacrylat und/oder Styrol.

Das niedrigmolekulare, dauerplastische, flüssige Polymer (B) besitzt ein über den K-Wert nach der Norm DIN ISO 1628-1 ermitteltes Molekulargewicht von vorzugsweise 100.000 bis 8.000.000, noch bevorzugter von 250.000 bis 5.000.000.

Vorzugsweise weist das niedrigmolekulare, dauerplastische, flüssige Polymer (B) eine in 50%-iger Lösung in Ethylacetat nach DIN ISO 3219 bei 23°C bestimmte Viskosität von 40 bis 350 mPa.s, vorzugsweise von 50 bis 200 mPa.s auf.

Vorzugsweise enthält die Knetmasse als Brandschutzaddit (C) keramisierend wirkende (C1), ablativ wirkende (C2), intumeszierende (C3) und/oder flammhemmende (C4) Additive.

Bei den keramisierend wirkenden Brandschutzadditiven (C1) handelt es sich um Additive, die im Brandfall aus der erfindungsgemäßen Knetmasse eine sehr feste Asche bilden, ohne daß sich dabei das Volumen ändert. Es kann sich dabei um verglasende Additive, wie Glasmehl, Glasfritten, Ammoniumpolyphosphat oder Borate handeln; Additive, die im eigentlichen Sinne keramisierend wirken, wie Kaolin, Ton und Bentonite; sowie bestimmte Polymere mit hohem aromatischen Anteil, die zum Verkohlen neigen und dadurch die Versinterung der Füllstoffe unterstützen. Vorzugsweise liegt dabei ein hoher Anteil an anorganischen Füllstoffen vor, die mit den Additiven zusammensintern.

Gemäß einer bevorzugten Ausführungsform der Erfindung werden daher als keramisierend wirkende Additive (C1) Glasmehl, Glasfritten, Glasfasern, Zinkborate, Ammoniumpolyphosphate, Kaolin, Ton, Bentonit und Mischungen dieser Additive eingesetzt.

Als ablativ wirkende Additive (C2), welche im Brandfall durch Abspaltung von $H_2O$ oder $CO_2$ energiezehrend wirken und dadurch die Abbrandgeschwindigkeit des Materials reduzieren, werden erfindungsgemäß Aluminiumhydroxid, Magnesiumhydroxid, Böhmit (AIOOH), Zinkborat, Calciumsulfat, Colemanit, Ulexit, Boracit und Mischungen davon eingesetzt.

Als intumeszierende Brandschutzaddit (C3) enthält die erfindungsgemäße Knetmasse vorzugsweise physikalisch intumeszierende Brandschutzaddit, namentlich thermisch expandierbare Graphite, Vermiculte und Perlite, insbesondere Blähgraphit, der gegebenenfalls eine durch chemische Modifizierung, das heißt durch das Einbringen von bestimmten Intercalatverbindungen modifizierte Onset-Temperatur aufweist. Bei der Onset-Temperatur handelt es sich um die Temperatur, bei der der Expansionsvorgang einsetzt. Diese physikalisch intumeszierenden Brandschutzaddit besitzen gegenüber den chemisch intumeszierenden Brandschutzadditiven den Vorteil, daß sie einen wesentlich höheren Expansionsdruck und höhere Expansionsvolumina ermöglichen und damit zur Folge haben, daß durch Einbringen dieser Brandschutzaddit in die erfindungsgemäße Knetmasse die Anforderungen an Brandschutzmassen für Kunststoffrohre, kunststoffisolierte Kabel und Kabelbündel und Stahlrohre mit organischen Isolierungen erfüllt werden können.

Neben diesen bevorzugten physikalisch intumeszierenden Brandschutzadditiven kann die erfindungsgemäße Knetmasse auch chemisch intumeszierende Mischungen umfassen, die Ammoniumpolyphosphat, Melamin oder Derivate davon, insbesondere Melaminphosphat und Melamincyanurat, Ethylendiaminphosphat, Guanidine, Hydrazine und Tris-2-hydroxyethylcyanurat und mindestens eine Kohlenstoffquelle, vorzugsweise Pentaerythrit, enthalten.

Die erfindungsgemäßen Knetmassen können als flammhemmendes Additiv (C4) mindestens einen Vertreter der roten Phosphor, Phosphorverbindungen, insbesondere Triethylphosphat, Triphenylphosphat, Diphenylkresylphosphat, Diphenyl-2-ethylhexylphosphat, Trikresylphosphat, Tris(2-ethylhexyl)-phosphat, halogenierte Phosphorsäureester, insbesondere Trichlorethylphosphat, Tris(2-chlorisopropyl)-phosphat, Tris(tribromphenyl)-phosphat, Trisbromneopentylphosphat und Tris (2-chlorethyl)-phosphat, (cyclo)aliphatische Bromverbindungen, insbesondere Hexabromcyclododecan, aromatische Bromverbindungen, insbesondere Tris(tribromphenyl)-triazin, Poly(pentabrombenzylacrylat), Octabromdiphenyloxid, Decabromdiphenyloxid, bromiertes Trimethylphenylindan, und Metallhydroxide, insbesondere Aluminiumhydroxid oder Magnesiumhydroxid, Zinkborat, Ammoniumpolyphosphat und Antimonoxid umfassenden Gruppe enthalten.

Die erfindungsgemäße Knetmasse kann gemäß einer bevorzugten Ausführungsform als übliche Hilfsstoffe Wasser (D), Stabilisatoren (E), Pigmente (F) und/oder Füllstoffe (G) enthalten.

Dabei werden als Stabilisatoren (E) vorzugsweise Fungizide, Biozide, Dispergatoren, Alterungsschutzmittel, rheologische Additive, Gleitmittel, Frostschutzmittel oder Mischungen davon eingesetzt.

Als Pigmente (F) kann die erfindungsgemäße Knetmasse rotes Eisenoxid, braunes Eisenoxid, gelbes Eisenoxid, Titandioxid, Ruß, Zinkoxid, Chromoxide oder Mischungen davon enthalten.

Gemäß einer weiteren bevorzugten Ausführungsform der Erfindung enthält die Knetmasse als Füllstoff (G) einen anorganischen Füllstoff, ausgewählt aus der Metalloxide, Borate, Carbonate, vorzugsweise Kreide, Silikate, Kaolin, Schwerspat, Talkum, Glaspulver, Eisenoxid, Titandioxid, Siliciumdioxid, anorganische Schäume, vorzugsweise geschäumten Blähton, geschäumten Perlit und geschäumten Vermiculit, und/oder Hohlkügelchen aus silikatischem Material oder Glas, Verstärkerfüllstoffe, insbesondere Glasfasern, Mineralfasern, Keramikfasern, Wollastonit, hochdisperse Kieselsäure und Mischungen davon umfassenden Gruppe.

Gemäß einer weiteren bevorzugten Ausführungsform umfaßt die oben definierte Knetmasse: 10 bis 30 Gew.-%, vorzugsweise 15 bis 25 Gew.-% der wässrigen Polymerdispersion (A),

5 bis 25 Gew.-%. vorzugsweise 10 bis 20 Gew.-% des niedrigmolekularen, dauerplastischen, flüssigen Polymers (B),

2 bis 50 Gew.-%, vorzugsweise 5 bis 35 Gew.-% der Brandschutzadditive (C),

2 bis 30 Gew.-%, vorzugsweise 5 bis 15 Gew.-% Wasser (D),

0,1 bis 2,0 Gew.-%, vorzugsweise 0,5 bis 1,5 Gew.-% Stabilisatoren (E),

0,1 bis 2,0 Gew.-%, vorzugsweise 0,5 bis 1,5 Gew.-% Pigmente (F) und/oder

15 bis 60 Gew.-%, vorzugsweise 10 bis 20 Gew.-% Füllstoffe (G),

jeweils auf das Gewicht der Knetmasse bezogen und mit der Maßgabe, daß die Menge sämtlicher Bestandteile 100% nicht übersteigt.

Gemäß einer weiter bevorzugten Ausführungsform enthält die erfindungsgemäße Knetmasse:

2 bis 20 Gew.-%, vorzugsweise 5 bis 12 Gew.-% der Brandschutzadditive (C1), 2 bis 36 Gew.-%, vorzugsweise 5 bis 35 Gew.-% der Brandschutzadditive (C2) 5 bis 35 Gew.-%, vorzugsweise 10 bis 30 Gew.-% der Brandschutzadditive (C3), und/oder 1 bis 20 Gew.-%, vorzugsweise 0,5 bis 5 Gew.-% der Brandschutzadditive (C4) mit der Maßgabe enthält, jeweils auf das Gewicht der Knetmasse bezogen und mit der Maßgabe, daß die Gesamtmenge der Brandschutzadditive (C) 60 Gew.-% der Knetmasse nicht übersteigt.

Die erfindungsgemäße Knetmasse ist dauerplastisch, das heißt, sie härtet nach der bestimmungsgemäßen Anwendung auch nach längerer Zeit nicht aus, sondern läßt sich ohne weiteres wieder von der Anwendungsstelle ablösen, erneut zusammenkneten und wiederverwenden, ohne daß dabei die in der Knetmasse vorhandenen physikalisch intumeszierenden Brandschutzadditive ihre Wirkung verlieren. Vorzugsweise besitzt die erfindungsgemäße Knetmasse eine über die Nadelpenetration nach DIN 515792 bestimmte Viskosität entsprechend einer Eindringtiefe der Nadel (bei einem Gesamtgewicht von 12,5 g, einer Eindringzeit von 5 Sekunden bei 20°C) von 3 bis 40 mm, vorzugsweise 3 bis 20 mm, wobei die höheren Eindringtiefen bei einem höheren Wassergehalt der erfindungsgemäßen Knetmasse auftreten.

Die erfindungsgemäße Knetmasse kann in Form von Stäben, Streifen oder Platten oder aber bei einem höheren Wassergehalt innerhalb des oben definierten Bereiches in Kartuschen und/oder Beuteln vorliegen, aus denen sie im Anwendungsfall unter Druckeinwirkung ausgetrieben und verarbeitet werden kann.

Gegenstand der Erfindung ist weiterhin ein Verfahren zur Herstellung der erfindungsgemäßen Knetmasse, welches dadurch gekennzeichnet ist, daß man:

    a) eine homogene Mischung aus der wässrigen Polymerdispersion (A), Wasser und gegebenenfalls einen oder mehreren Stabilisatoren (E) bildet;

    b) die Mischung auf einen pH-Wert im Bereich von 8 bis 9 einstellt;

    c) das niedrigmolekulare, dauerplastische, flüssige Polymer (B) untermischt;

    d) gegebenenfalls Pigmente (F), Füllstoffe (G) und gegebenenfalls keramisierend wirkende (C1), ablativ wirkende (C2), und/oder flammhemmende (C4) Additive einarbeitet und homogenisiert;

    e) gegebenenfalls das intumeszierende (C3) Additiv zusetzt, - wobei mindestens eines der Brandschutzadditive C1 bis C4 eingearbeitet wird - die Mischung homogenisiert, gegebenenfalls extrudiert und gegebenenfalls trocknet.

Erfindungsgemäß ist es wesentlich, daß das Trocknen in der Stufe e) bei einer Temperatur unterhalb 150°C durchgeführt wird, wenn ein physikalisch intumeszierendes Additiv (C3) in der Knetmasse enthalten ist, insbesondere thermisch expandierbarer Graphit, Vermiculit und/oder Perlit.

Gegenstand der Erfindung ist weiterhin die Verwendung der oben definierten Knetmasse zur Abdichtung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken , zwischen Decken und Wänden und zwischen Außenwänden und vorgehängten Fassaden von Gebäuden zum Zwecke der Wärmeisolation und/oder des Brandschutzes.

Die folgenden Beispiele und Vergleichsbeispiele dienen der weiteren Erläuterung der Erfindung.

## BEISPIEL 1

Man bereitet aus den folgenden Bestandteilen eine erfindungsgemäße Knetmasse.

| | |
|---|---|
| Wässrige Acrylat-Polymerdispersion (Wassergehalt 37%, Acronal V271) | 15 Gew.-Teile |
| flüssiges Acrylat-Polymer (Acronal A4) | 20 Gew.-Teile |
| Wasser | 3 Gew.-Teile |
| Kreide (Füllstoff G) | 25 Gew.-Teile |
| Kaolin (Füllstoff G) | 14 Gew.-Teile |
| Blähgraphit (intumeszierendes Additiv C3) | 16 Gew.-Teile |
| Ammoniumpolyphosphat (keramisierend wirkendes Additiv C1) | 6 Gew.-Teile |
| Eisenoxidrot (Pigment F) | 0,4 Gew.-Teile |
| Fungizid (Mergal S97) | 0,3 Gew.-Teile |
| Dispergator (Pigmentverteiler E) | 0,3 Gew.-Teile |
| | 100 Gew.-Teile |

Für die Herstellung dieser Knetmasse legt man die Acrylatdispersion, das Fungizid, den Dispergator und Wasser vor, stellt die Mischung mit Ammoniak auf einen pH-Wert von 8 bis 9 ein, mischt das flüssige Acrylat-Polymer unter, arbeitet die Füllstoffe, das Pigment und das Ammoniumpolyphosphat ein und homogenisiert die Mischung. Dann mischt man den Blähgraphit unter und homogenisiert das Material, wobei das Durchmischen und Homogenisieren in einem Planetenmischer erfolgt.

Die erhaltene Knetmasse besitzt direkt nach dem Mischen die Konsistenz einer Silikondichtmasse und einen Gesamtwassergehalt von 8,55%.

Mit einer geeigneten Vorrichtung (Extruder oder Presse) kann diese Masse in die gewünschte Form gebracht und bei einer Temperatur unterhalb 150°C getrocknet werden, wobei das Material die Konsistenz einer Dichtmasse annimmt.

Die vor dem Trocknen erhaltene Knetmasse kann auch direkt in Kartuschen oder Beutel abgefüllt und als Dichtmasse verarbeitet werden.

Die mit Hilfe der Nadelpenetration nach DIN 515792 ermittelte Viskosität der Knetmasse ergibt sich wie folgt:

Eindringtiefe der Nadel vor dem Trocknen: 18,6 mm
Eindringtiefe der Nadel nach dem Trocknen: 4,6 mm.

## BEISPIEL 2

Nach der Verfahrensweise des Beispiels 1 bereitet man eine Knetmasse die ein keramisierend wirkendes Brandschutzadditiv enthält unter Anwendung der folgenden Bestandteile:

| | |
|---|---|
| Acrylatdispersion (Acronal V271) | 13,0 Gew.-% |
| flüssiges Polymer (Acronal A4) | 25,0 Gew.-% |
| Wasser | 2,0 Gew.-% |
| Stabilisatoren (Fungizid, Dispergator) | 0,6 Gew.-% |
| Pigment (Eisenoxid, $TiO_2$) | 0,4 Gew.-% |

(fortgesetzt)

| | |
|---|---|
| Füllstoff (Kreide, Kaolin 1:1) | 29,0 Gew.-% |
| Füllstoff (Quarzmehl) | 18,0 Gew.-% |
| keramisierend wirkendes Additiv (Zinkborat) | 6,0 Gew.-% |
| keramisierend wirkendes Additiv (Ammoniumpolyphosphat) | 6,0 Gew.-% |

Die in dieser Weise hergestellte Knetmasse besitzt einen Wassergehalt von 6,8 Gew.-%.

**BEISPIEL 3**

Man bereitet nach der Verfahrensweise des Beispiels 1 eine erfindungsgemäße Knetmasse mit einem Gehalt an keramisierend wirkendem und ablativ wirkendem Brandschutzadditiv unter Verwendung der folgenden Bestandteile:

| | |
|---|---|
| Acrylatdispersion (Acronal V271) | 13,0 Gew.-% |
| flüssiges Polymer (Acronal A4) | 25,0 Gew.-% |
| Wasser | 2,0 Gew.-% |
| Stabilisatoren (Fungizid, Dispergator) | 0,6 Gew.-% |
| Pigment (Eisenoxid, $TiO_2$) | 0,4 Gew.-% |
| Füllstoff (Kreide, Kaolin 1:1) | 20,0 Gew.-% |
| keramisierend wirkendes Additiv (Zinkborat) | 6,0 Gew.-% |
| ablativ wirkendes Additiv (Aluminium-hydroxid) | 33,0 Gew.-% |

Die in dieser Weise hergestellte Knetmasse besitzt einen Wassergehalt von 6,8 Gew.-%.

**BEISPIEL 4**

Unter Anwendung der Verfahrensweise des Beispiels 1 bereitet man eine erfindungsgemäße Knetmasse mit einem Gehalt an einem chemisch intumeszierenden Brandschutzadditiv unter Anwendung der folgenden Bestandteile:

| | |
|---|---|
| Acrylatdispersion (Acronal V271) | 13,0 Gew.-% |
| flüssiges Polymer (Acronal A4) | 25,0 Gew.-% |
| Wasser | 2,0 Gew.-% |
| Stabilisatoren (Fungizid, Dispergator) | 0,6 Gew.-% |
| Pigment (Eisenoxid, $TiO_2$) | 0,4 Gew.-% |
| Füllstoff (Kreide, Kaolin 1:1) | 23,0 Gew.-% |
| Füllstoff (Quarzmehl) | 10,0 Gew.-% |
| chemisch intumeszierende Mischung (Ammoniumpolyphosphat + Melamin + Dipentaerythrit 3:3:1) | 26,0 Gew.-% |

Die in dieser Weise hergestellte Knetmasse besitzt einen Wassergehalt von 6,8 Gew.-%.

**BEISPIEL 5**

Zum Vergleich der mit Hilfe der erfindungsgemäßen Knetmasse erzielbaren überraschenden intumeszierenden Wirkung wurde eine herkömmliche Dichtmasse auf der Grundlage von Butylkautschuk mit einem Gehalt an einem chemisch intumeszierenden Brandschutzadditiv und eine solche Dichtmasse, in die 16% Blähgraphit eingebracht worden ist, mit der erfindungsgemäßen Knetmasse gemäß Beispiel 1 mit einem Blähgraphitgehalt von 16% bezüglich ihres Expansionsverhaltens beim Erhitzen auf 600°C verglichen.

Hier wurde die Schaumhöhe nach der Richtlinie für intumeszierende Baustoffe des DIBT gemessen, das heißt nach dem Erhitzen während 30 Minuten bei 600°C mit einer Gewichtsbelastung von 5 g/cm. Die hierbei erhaltenen Ergebnisse sind in der folgenden Tabelle zusammengestellt:

| | Butylknetmasse chemisch intumeszierend | Butylknetmasse mit 16% Blähgraphit | erfindungsgemäße Knetmasse nach Beispiel 1 |
|---|---|---|---|
| Schaumhöhe bei 600°C | 5mm (aus 5 mm Ausgangsstärke) | 11 mm (aus 5 mm Ausgangsstärke) | 45 mm (aus 5 mm Ausgangsstärke) |
| Expansionsfaktor | 0 | 2 | 9 |
| | | Graphit weitgehend zerstört | |

Es ist ersichtlich, daß mit der herkömmlichen Dichtmasse auf der Grundlage von Butylkautschuk, die lediglich ein chemisch intumeszierendes Brandadditiv enthält, keinerlei Expansion beim Erhitzen auf 600°C erreicht wird. Wenn man diese herkömmliche Butylkautschuk-Knetmasse mit 16 Gew.-% Blähgraphit versetzt, ergibt sich lediglich eine Schaumhöhe von 11 mm, da der Graphit beim Einbringen weitgehend zerstört wird.

Im Gegensatz dazu zeigt die erfindungsgemäße Knetmasse eine Schaumhöhe von 45 mm, was einer Expansion um den Faktor 9 entspricht.

Es ist also festzustellen, daß die erfindungsgemäße Knetmasse durch den erfindungsgemäßen Einsatz einer Matrixmasse aus einer wässrigen Polymerdispersion und einem niedrigmolekularen, dauerplastischen, flüssigen Polymer eine dramatische Verbesserung des Expansionsverhaltens verursacht.


**Patentansprüche**

1. Dauerplastische Knetmasse für Brandschutzanwendungen, umfassend eine Brandschutzadditive und übliche Hilfsstoffe enthaltende Matrixmasse auf der Grundlage von organischen Polymeren, **dadurch gekennzeichnet, daß** die Matrixmasse eine Mischung aus einer wässrigen Polymerdispersion (A) und einem niedrigmolekularen, dauerplastischen, flüssigen Polymer (B) in einem Gewichtsverhältnis von (A) zu (B) von 6:1 bis 1:2,5, vorzugsweise von 4:3 bis 3:4 darstellt.

2. Knetmasse nach Anspruch 1, **dadurch gekennzeichnet, daß** die wäßrige Polymerdispersion (A) als Polymer mindestens einen Vertreter der Polyurethane, Polyvinylacetate, Polyvinylether, Polyvinylpropionate, Polystyrole, natürliche oder synthetische Kautschuke, Poly((meth)acrylate) und Homound Copolymere auf der Grundlage von (Meth)acrylaten, Acrylnitril, Vinylestern Vinylethern, Vinylchlorid und/oder Styrol umfassenden Gruppe enthält.

3. Knetmasse nach Anspruch 2, **dadurch gekennzeichnet, daß** die wässrige Polymerdispersion (A) als Polymer Poly(methacrylsäurealkylester), Poly(acrylsäurealkylester), Poly(methacrylsäurearylester), Poly(acrylsäurearylester) und/oder Copolymere davon mit n-Butylacrylat und/oder Styrol enthält.

4. Knetmasse nach mindestens einem der Ansprüche 1 bis 3, **dadurch gekennzeichnet, daß** die wässrige Polymerdispersion (A) einen Wassergehalt von 5 bis 60 Gew.-%, vorzugsweise von 20 bis 40 Gew.-% aufweist.

5. Knetmasse nach mindestens einem der Ansprüche 1 bis 4, **dadurch gekennzeichnet, daß** die wässrige Polymerdispersion (A) in einer solchen Menge in der Matrixmasse enthalten ist, daß sich ein Wasseranteil in der Knetmasse von 2 bis 30 Gew.-%, vorzugsweise von 5 bis 15 Gew.-%, ergibt.

6. Knetmasse nach Ansprüchen 1 bis 5, **dadurch gekennzeichnet, daß** sie als flüssiges Polymer (B) mindestens einen Vertreter der Polyurethane, Polyvinylacetate, Polyvinylether, Polyvinylpropionate, Polystyrole, natürliche oder synthetische Kautschuke, Poly((meth)acrylate) und Homo- und Copolymere auf der Grundlage von (Meth)acrylaten, Acrylnitril, Vinylestern Vinylethern, Vinylchlorid und/oder Styrol umfassenden Gruppe enthält.

7. Knetmasse nach Anspruch 6, **dadurch gekennzeichnet, daß** sie als flüssiges Polymer (B) Poly(methacrylsäurealkylester), Poly(acrylsäurealkylester), Poly(methacrylsäurearylester), Poly(acrylsäurearylester) und/oder Copolymere davon mit n-Butylacrylat und/oder Styrol enthält.

8. Knetmasse nach den Ansprüchen 5 bis 7, **dadurch gekennzeichnet, daß** das niedrigmolekulare, dauerplastische, flüssige Polymer (B) ein Molekulargewicht von 100.000 bis 8.000.000, vorzugsweise von 250.000 bis 5.000.000 aufweist.

9. Knetmasse nach mindestens einem der Ansprüche 6 bis 8, **dadurch gekennzeichnet, daß** das niedrigmolekulare, dauerplastische, flüssige Polymer (B) eine Viskosität von 40 bis 350 mPa.s, vorzugsweise von 50 bis 200 mPa.s aufweist.

10. Knetmasse nach mindestens einem der vorhergehenden Ansprüche, **dadurch gekennzeichnet, daß** sie als Brandschutzadditive (C) keramisierend wirkende (C1), ablativ wirkende (C2), intumeszierende (C3) und/oder flammhemmende (C4) Additive enthält.

11. Knetmasse nach Anspruch 10, **dadurch gekennzeichnet, daß** sie als keramisierend wirkendes (C1) Additiv mindestens einen Vertreter der Glasmehl, Glasfritten, Glasfasern, Zinkborat, Ammoniumpolyphosphat, Kaolin, Ton und Bentonit umfassenden Gruppe enthält.

12. Knetmasse nach Anspruch 10, **dadurch gekennzeichnet, daß** sie als ablativ wirkendes (C2) Additiv mindestens einen Vertreter der Aluminiumhydroxid, Magnesiumhydroxid, Böhmit (AlOOH), Zinkborat, Calciumsulfat, Colemanit, Ulexit und Boracit umfassenden Gruppe enthält.

13. Knetmasse nach Anspruch 10, **dadurch gekennzeichnet, daß** sie als intumeszierendes (C3) Additiv mindestens einen Vertreter aus der Gruppe enthält, die thermisch expandierbare Graphite, Vermiculite und Perlite; Natriumborsilikate, gekapselte Natriumborsilikate; und chemisch intumeszierende Mischungen, die Ammoniumpolyphosphat, Melamin oder Derivate davon, insbesondere Melaminphosphat und Melamincyanurat, Ethylendiaminphosphat, Guanidine, Hydrazine und Tris-2-hydroxyethylcyanurat und mindestens eine Kohlenstoffquelle, vorzugsweise Pentaerythrit, enthalten, umfaßt

14. Knetmasse nach Anspruch 10, **dadurch gekennzeichnet, daß** sie als flammhemmendes (C4) Additiv mindestens einen Vertreter der roten Phosphor, Phosphorverbindungen, insbesondere Triethylphosphat, Triphenylphosphat, Diphenylkresylphosphat, Diphenyl-2-ethylhexylphosphat, Trikresylphosphat, Tris(2-ethylhexyl)-phosphat, halogenierte Phosphorsäureester, insbesondere Trichlorethylphosphat, Tris(2-chlorisopropyl)-phosphat, Tris(tribromphenyl)-phosphat, Trisbromneopentylphosphat und Tris(2-chlorethyl)-phosphat, (cyclo)aliphatische Bromverbindungen, insbesondere Hexabromcyclododecan, aromatische Bromverbindungen, insbesondere Tris(tribromphenyl)-triazin, Poly(pentabrombenzylacrylat), Octabromdiphenyloxid, Decabromdiphenyloxid, bromiertes Trimethylphenylindan, und Metallhydroxide, insbesondere Aluminiumhydroxid oder Magnesiumhydroxid, Zinkborat, Ammoniumpolyphosphat und Antimonoxid umfassenden Gruppe enthält.

15. Knetmasse nach mindestens einem der vorhergehenden Ansprüche, **dadurch gekennzeichnet, daß** sie als übliche Hilfsstoffe Wasser (D), Stabilisatoren (E), Pigmente (F) und/oder Füllstoffe (G) enthält.

16. Knetmasse nach Anspruch 15, **dadurch gekennzeichnet, daß** sie als Stabilisatoren (E) Fungizide, Biozide, Dispergatoren, Alterungsschutzmittel, rheologische Additive, Gleitmittel, Frostschutzmittel oder Mischungen davon enthält.

17. Knetmasse nach Anspruch 16, **dadurch gekennzeichnet, daß** sie als Pigmente (F) rotes Eisenoxid, Titandioxid, Ruß, Zinkoxid, Chromoxide oder Mischungen davon enthält.

18. Knetmasse nach Anspruch 15, **dadurch gekennzeichnet, daß** sie als Füllstoff (G) einen anorganischen Füllstoff ausgewählt aus der Metalloxide, Borate, Carbonate, vorzugsweise Kreide, Silikate, Kaolin, Schwerspat, Talkum, Glaspulver, Eisenoxid, Titandioxid, Siliciumdioxid, anorganische Schäume, vorzugsweise geschäumten Blähton, geschäumten Perlit und geschäumten Vermiculit, und/oder Hohlkügelchen aus silikatischem Material oder Glas, Verstärkerfüllstoffe, insbesondere Glasfasern, Mineralfasern, Keramikfasern, Wollastonit, hochdisperse Kieselsäure und Mischungen davon umfassenden Gruppe enthält.

19. Knetmasse nach mindestens einem der vorhergehenden Ansprüche, **dadurch gekennzeichnet, daß** sie
10 bis 30 Gew.-%, vorzugsweise 15 bis 25 Gew.-% der wässrigen Polymerdispersion (A),
5 bis 25 Gew.-%, vorzugsweise 10 bis 20 Gew.-% des niedrigmolekularen, dauerplastischen, flüssigen Polymers (B),
2 bis 50 Gew.-%, vorzugsweise 5 bis 35 Gew.-% der Brandschutzadditive (C),
2 bis 30 Gew.-%, vorzugsweise 5 bis 15 Gew.-% Wasser (D),
0,1 bis 2,0 Gew.-%, vorzugsweise 0,5 bis 1,5 Gew.-% Stabilisatoren (E),
0,1 bis 2,0 Gew.-%, vorzugsweise 0,5 bis 1,5 Gew.-% Pigmente (F) und/oder

15 bis 60 Gew.-%, vorzugsweise 10 bis 20 Gew.-% Füllstoffe (G),
jeweils auf das Gewicht der Knetmasse bezogen und mit der Maßgabe, daß die Menge sämtlicher Bestandteile 100% nicht übersteigt, enthält.

20. Knetmasse nach Anspruch 19, **dadurch gekennzeichnet, daß** sie 2 bis 20 Gew.-%, vorzugsweise 5 bis 12 Gew.-% der Brandschutzadditive (C1), 2 bis 36 Gew.-%, vorzugsweise 5 bis 35 Gew.-% der Brandschutzadditive (C2) 5 bis 35 Gew.-%, vorzugsweise 10 bis 30 Gew.-% der Brandschutzadditive (C3), und/oder 1 bis 20 Gew.-%, vorzugsweise 0,5 bis 5 Gew.-% der Brandschutzadditive (C4) mit der Maßgabe enthält, jeweils auf das Gewicht der Knetmasse bezogen und mit der Maßgabe, daß die Gesamtmenge der Brandschutzadditive (C) 60 Gew.-% der Knetmasse nicht übersteigt.

21. Knetmasse nach mindestens einem der vorhergehenden Ansprüche, **dadurch gekennzeichnet, daß** sie eine durch Nadelpenetration nach DIN 515792 gemessene Viskosität entsprechend einer Nadeleindringtiefe von 3 bis 40 mm, vorzugsweise 3 bis 20 mm aufweist.

22. Knetmasse nach mindestens einem der vorhergehenden Ansprüche, **dadurch gekennzeichnet, daß** sie in Form von Stäben, Streifen oder Platten, oder in Kartuschen und/oder Beuteln vorliegt, aus denen sie bei der Anwendung unter Druckeinwirkung ausgetrieben werden kann.

23. Verfahren zur Herstellung der Knetmasse nach den Ansprüchen 1 bis 22, **dadurch gekennzeichnet, daß** man

a) eine homogene Mischung aus der wässrigen Polymerdispersion (A), Wasser und gegebenenfalls Stabilisatoren (E) bildet;
b) die Mischung auf einen pH-Wert im Bereich von 8 bis 9 einstellt;
c) das niedrigmolekulare, dauerplastische, flüssige Polymer (B) untermischt;
d) gegebenenfalls Pigmente (F), Füllstoffe (G) und gegebenenfalls keramisierend wirkende (C1), ablativ wirkende (C2), und/oder flammhemmende (C4) Additive einarbeitet und homogensiert;
e) gegebenenfalls das intumeszierende (C3) Additiv zusetzt, - wobei mindestens eines der Brandschutzadditive C1 bis C4 eingearbeitet wird - die Mischung homogenisiert, gegebenenfalls extrudiert und gegebenenfalls trocknet.

24. Verfahren Anspruch 23, **dadurch gekennzeichnet, daß** man das Trocknen in der Stufe e) bei einer Temperatur unterhalb 150°C durchführt, wenn ein intumeszierendes (C3) Additiv in der Knetmasse enthalten ist.

25. Verwendung der Knetmasse nach den Ansprüchen 1 bis 24 zur Abdichtung von Öffnungen, Kabel- und Rohrdurchführungen in Wänden, Böden und/oder Decken, von Fugen zwischen Decken- und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke der Wärmeisolation und/ oder des Brandschutzes.

**Europäisches Patentamt**

# EUROPÄISCHER RECHERCHENBERICHT

Nummer der Anmeldung

EP 04 10 3679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 791 352 A (CHAVANOZ IND) 29. September 2000 (2000-09-29) * Seite 2, Zeile 1 - Zeile 3 * * Ansprüche * ----- | 1-25 | C08L101/00 C08L101/14 C08L33/08 C08J3/22 |
| X | WO 83/04041 A (NORSK KABELFABRIK AS) 24. November 1983 (1983-11-24) * Seite 4, Absatz 4 * * Ansprüche * ----- | 1-25 | |
| X | GB 1 450 642 A (MONSANTO CO) 22. September 1976 (1976-09-22) * Beispiele * ----- | 1-25 | |
| A | US 5 578 671 A (WELNA WALTON W) 26. November 1996 (1996-11-26) * Anspruch 1 * ----- | 1 | |
| A | US 6 031 040 A (HORACEK HEINRICH) 29. Februar 2000 (2000-02-29) * Anspruch 1 * ----- | 1 | |

**RECHERCHIERTE SACHGEBIETE (Int.Cl.7)**

C08L
C08J

Der vorliegende Recherchenbericht wurde für alle Patentansprüche erstellt

| Recherchenort | Abschlußdatum der Recherche | Prüfer |
|---|---|---|
| München | 20. Oktober 2004 | West, N |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 10 3679

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-10-2004

| Im Recherchenbericht angeführtes Patentdokument | | Datum der Veröffentlichung | Mitglied(er) der Patentfamilie | | Datum der Veröffentlichung |
|---|---|---|---|---|---|
| FR 2791352 | A | 29-09-2000 | FR | 2791352 A1 | 29-09-2000 |
| | | | AU | 3564300 A | 09-10-2000 |
| | | | CA | 2365117 A1 | 28-09-2000 |
| | | | EP | 1173526 A1 | 23-01-2002 |
| | | | WO | 0056839 A1 | 28-09-2000 |
| | | | FR | 2791353 A1 | 29-09-2000 |
| | | | JP | 2003528933 T | 30-09-2003 |
| WO 8304041 | A | 24-11-1983 | AT | 29149 T | 15-09-1987 |
| | | | AU | 552976 B2 | 26-06-1986 |
| | | | AU | 1518183 A | 02-12-1983 |
| | | | BR | 8307387 A | 08-05-1984 |
| | | | DE | 3344156 T | 07-02-1985 |
| | | | DE | 3373194 D1 | 01-10-1987 |
| | | | DK | 6984 A | 06-01-1984 |
| | | | EP | 0109408 A1 | 30-05-1984 |
| | | | FI | 834805 A ,B, | 27-12-1983 |
| | | | FI | 875741 A | 29-12-1987 |
| | | | GB | 2130223 A ,B | 31-05-1984 |
| | | | IE | 54753 B1 | 31-01-1990 |
| | | | NO | 834495 A ,B, | 07-12-1983 |
| | | | WO | 8304041 A1 | 24-11-1983 |
| | | | US | 4543281 A | 24-09-1985 |
| | | | KR | 9003433 B1 | 18-05-1990 |
| | | | CA | 1220600 A1 | 14-04-1987 |
| GB 1450642 | A | 22-09-1976 | AR | 197547 A1 | 15-04-1974 |
| | | | AU | 6544774 A | 14-08-1975 |
| | | | BR | 7401010 A | 14-09-1976 |
| | | | CA | 1027283 A1 | 28-02-1978 |
| | | | DE | 2406334 A1 | 15-08-1974 |
| | | | FR | 2219957 A1 | 27-09-1974 |
| | | | FR | 2225463 A1 | 08-11-1974 |
| | | | IL | 44184 A | 31-05-1977 |
| | | | IT | 1007368 B | 30-10-1976 |
| | | | JP | 50029692 A | 25-03-1975 |
| US 5578671 | A | 26-11-1996 | CA | 2208602 A1 | 11-07-1996 |
| | | | DE | 69508115 D1 | 08-04-1999 |
| | | | DE | 69508115 T2 | 22-07-1999 |
| | | | EP | 0799288 A1 | 08-10-1997 |
| | | | HK | 1004631 A1 | 07-04-2000 |
| | | | JP | 2001527585 T | 25-12-2001 |
| | | | WO | 9620987 A1 | 11-07-1996 |
| US 6031040 | A | 29-02-2000 | AT | 405410 B | 25-08-1999 |

Für nähere Einzelheiten zu diesem Anhang : siehe Amtsblatt des Europäischen Patentamts, Nr.12/82

EPO FORM P0461

## ANHANG ZUM EUROPÄISCHEN RECHERCHENBERICHT
## ÜBER DIE EUROPÄISCHE PATENTANMELDUNG NR.

EP 04 10 3679

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-10-2004

| Im Recherchenbericht angeführtes Patentdokument | Datum der Veröffentlichung | Mitglied(er) der Patentfamilie | Datum der Veröffentlichung |
|---|---|---|---|
| US 6031040      A | | AT        85797 A<br>AT       204897 T<br>DE     59801282 D1<br>EP      0879870 A1 | 15-12-1998<br>15-09-2001<br>04-10-2001<br>25-11-1998 |

EPO FORM P0461

Für nähere Einzelheiten zu diesem Anhang : siehe Amtsblatt des Europäischen Patentamts, Nr.12/82